# EUROPÄISCHE PATENTANMELDUNG

(11) **EP 3 653 364 A1**
(43) Veröffentlichungstag der Anmeldung: **20.05.2020**
(21) Anmeldenummer: 18206557.3
(22) Anmeldetag: 15.11.2018
(51) Int. Cl.: B29C 65/08, B29C 65/06, B07B 1/42, B23K 20/10, B26D 7/08

(54) **BEARBEITUNGSSYSTEM ZUM BEARBEITEN MINDESTENS EINES WERKSTÜCKS**

(71) Anmelder: Telsonic Holding AG, 9552 Bronschhofen (CH)
(72) Erfinder: SOLENTHALER, Peter, 9543 St. Marharethen (CH); AYABAKAN, Mustafa, 9545 Wängi (CH)
(74) Vertreter: Hepp Wenger Ryffel AG

(57) **Zusammenfassung**

Es wird ein Bearbeitungssystem (10) zum Bearbeiten mindestens eines Werkstücks (101; 102) offenbart, insbesondere ein Ultraschallschweisssystem (10), wobei das Bearbeitungssystem (10) mindestens eine Bearbeitungskomponente (11; 12; 13; 14), insbesondere mindestens eine Schwingungskomponente (11; 12; 13), und mindestens eine mit der Bearbeitungskomponente (11; 12; 13; 14) verbundene oder verbindbare Dateneinheit (30) enthält, wobei die Dateneinheit (30) mindestens einen Sender (31) und mindestens einen Sensor (32; 36; 38) enthält. Die Dateneinheit (30) kann aufweisen: einen Energieempfänger (33), mittels dessen die Dateneinheit (10) Energie zur Energieversorgung der Dateneinheit (30), insbesondere des Senders (31), empfangen kann; einen internen Energieumwandler aufweist, der zur Umwandlung von Bewegungsenergie der Dateneinheit (30) in elektrische Energie zur Speisung der Dateneinheit (30) ausgebildet ist; einen Bewegungssensor (36); einen Lichtsensor (38).

## Beschreibung

Die vorliegende Erfindung befasst sich mit Bearbeitungssystemen zum Bearbeiten mindestens eines Werkstücks. Das Bearbeitungssystem kann beispielsweise ein Schwingungsbearbeitungssystem oder ein Rotationsbearbeitungssystem sein, insbesondere ein Ultraschallbearbeitungssystem oder ein Vibrationsbearbeitungssystem, insbesondere ein Ultraschallschweisssystem oder eine Vibrationsschweisssystem, mit dem mehrere Werkstücke miteinander verschweisst werden können.

In industriellen Anlagen, beispielsweise in der Automobil- oder der Verpackungsindustrie, werden häufig Bearbeitungssysteme eingesetzt, mit denen Werkstücke bearbeitet werden, beispielsweise durch Ultraschallschweissen miteinander verbunden werden. Die Inbetriebnahme eines solchen Bearbeitungssystems innerhalb einer Anlage gestaltet sich oftmals als sehr zeitaufwendig, was sowohl für den Hersteller und Monteur des Bearbeitungssystems als auch für den Anlagenbauer nachteilig ist. Zudem setzen Anlagenbauer je nach ihren Bedürfnissen und Gewohnheiten verschiedene Bussysteme ein, wie beispielsweise EtherCAT, Ethernet POWERLINK, Profibus oder Sercos. Ein standardisiertes Bussystem existiert nicht, was die Integration weiter erschwert.

Es ist daher eine Aufgabe der vorliegenden Erfindung, die Nachteile des Standes der Technik zu überwinden. Insbesondere sollen die Integration und Wartung eines Bearbeitungssystems, mit dem Werkstücke bearbeitet werden können, in eine industrielle Anlage vereinfacht werden.

Erfindungsgemäss wird dieser Aufgabe durch ein Bearbeitungssystem zum Bearbeiten mindestens eines Werkstücks gelöst. Es kann sich dabei beispielsweise um ein Schwingungsbearbeitungssystem handeln, wie beispielsweise ein Ultraschallbearbeitungssystem oder ein Vibrationsbearbeitungssystem, insbesondere ein Ultraschallschweisssystem oder ein Vibrationsschweisssystem. Alternativ kann das Bearbeitungssystem aber auch ein Rotationsbearbeitungssystem sein, mit dem Werkstücke durch eine relative Rotation miteinander verbunden werden können. Auch Ultraschallschneidesysteme, Ultraschallsiebsysteme und Ultraschallreinigungssysteme sind von der Erfindung umfasst.

Das Bearbeitungssystem enthält mindestens eine Bearbeitungskomponente, insbesondere mindestens eine Schwingungskomponente, und mindestens eine mit der Bearbeitungskomponente verbundene oder verbindbare Dateneinheit. Die Dateneinheit enthält mindestens einen Sender und mindestens einen Sensor.

Auf diese Weise ist es möglich, dass der Sender Daten an einen Empfänger des Bearbeitungssystems oder eine das Bearbeitungssystem enthaltene Anlage senden kann. Auf der Grundlage dieser Daten kann das Bearbeitungssystem oder die Anlage gesteuert werden. Mit Hilfe des Sensors können weitere Daten aufgenommen und mittels des Senders an die Anlage übertragen werden. Auf diese Weise wird die Integration des Bearbeitungssystems in die Anlage erheblich vereinfacht. Bei dem Sender kann es sich beispielsweise um einen an sich bekannten Beacon handeln, also um einen Sender, der auf der Bluetooth-Low-Energy(BLE)-Technologie oder auch Bluetooth-Smart-Technologie basiert. Derartige Beacons erlauben eine Platz und Energie sparende Datenübertragung mit einstellbarer Reichweite.

Die Dateneinheit verfügt bevorzugt über eine Gehäuse, innerhalb dessen der Sender und die weiter unten noch erläuterten optionalen Komponenten angeordnet ist, also mindestens ein Energieempfänger und/oder mindestens ein Frequenzfilter und/oder mindestens ein interner Energieumwandler und/oder mindestens ein Bewegungssensor und/oder mindestens ein Lichtsensor und/oder mindestens ein Datenspeicher und/oder mindestens ein Datenempfänger und/oder mindestens eine Recheneinheit und/oder mindestens eine Verschlüsselungseinheit oder mindestens eine Authentifizierungseinheit. Das Gehäuse kann direkt mit der Bearbeitungskomponente des Bearbeitungssystems verbunden werden. Das Gehäuse kann weiterhin einen Anschluss zum Anschliessen eines weiteren, externen Sensors enthalten. Die Dateneinheit kann eine Grösse aufweisen, die kleiner als 20 cm, bevorzugt kleiner als 15 cm und besonders bevorzugt kleiner als 10 cm ist.

Zweckmässigerweise weist die Dateneinheit einen Energieempfänger auf, mittels dessen die Dateneinheit Energie zur Energieversorgung der Dateneinheit, insbesondere des Senders, empfangen kann. Somit kann auf Batterien mit grosser Kapazität verzichtet werden, deren Ladezustand dann nicht mehr überwacht werden muss. Folglich können auch höhere Datenübertragungsraten erreicht werden, da kein allzu grosser Wert mehr auf die Energieeinsparung gelegt werden muss. Optional kann die Dateneinheit für eine gesicherte Energieversorgung mindestens eine Batterie enthalten, die aber dann keine besonders grosse Kapazität aufweisen muss.

Der Energieempfänger kann beispielsweise als Photovoltaikzelle ausgebildet sein. In dieser Ausführungsform ist es besonders günstig, wenn das Bearbeitungssystem oder die das Bearbeitungssystem enthaltende Anlage mindestens ein Leuchtelement aufweist, insbesondere mindestens eine Leuchtdiode, welches zur Versorgung des Energieempfängers mit Strahlungsenergie angeordnet und ausgebildet ist. Alternativ kann das Leuchtelement dem Bearbeitungssystem oder der dieses enthaltenden Anlage zugeordnet sein, ohne selbst Bestandteil davon zu sein. Eine Energieübertragung von einem Leuchtelement, insbesondere einer Leuchtdiode, zu einer Photovoltaikzelle beansprucht wenig Platz und ist über einen grösseren Abstand möglich.

Ebenfalls bevorzugt ist es, wenn die Dateneinheit einen Frequenzfilter zum Herausfiltern eines Frequenzbereichs der vom Leuchtelement abgegebenen Strahlung aufweist. Ist die vom Leuchtelement abgegebene Strahlung nicht auf den Frequenzfilter abgestimmt, so kann die Dateneinheit keine Energie empfangen. Hierdurch kann gewährleistet werden, dass nur eine mit dem Leuchtelement kompatible Dateneinheit verwendet werden kann.

In besonderen Ausführungsformen kann das Bearbeitungssystem mindestens zwei Leuchtelemente, insbesondere mindestens zwei Leuchtdioden, aufweisen, die zur Versorgung des Energieempfängers mit Strahlungsenergie mit zwei verschiedenen Spektren angeordnet und ausgebildet sind. Beispielsweise kann eine erste Leuchtdiode nur Strahlung in einem ersten Wellenlängenbereich abgeben und eine zweite Leuchtdiode kann Strahlung in nur einem vom ersten Wellenlängenbereich separierten zweiten Wellenlängenbereich abgeben. Bei entsprechender Ausbildung der Dateneinheit kann diese nur im Bereich der ersten Leuchtdiode oder nur im Bereich der zweiten Leuchtdiode mit Energie versorgt werden.

Alternativ oder zusätzlich ist es auch denkbar, dass durch verschiedene Leuchtelemente ein und derselben Dateneinheit verschiedene Funktionen zugewiesen werden. Beispielsweise kann eine Dateneinheit derart ausgebildet sein, dass sie bei Empfang einer Strahlung in einem ersten Wellenlängenbereich von einer ersten Leuchtdiode, die sich im Bereich einer Ultraschallsonotrode befindet, Daten der Ultraschallsonotrode sendet und bei Empfang einer Strahlung in einem zweiten Wellenlängenbereich von einer zweiten Leuchtdiode, die sich im Bereich eines Ambosses befindet, Daten des Ambosses sendet.

Alternativ oder zusätzlich zu einem Energieempfänger kann die Dateneinheit mindestens einen internen Energieumwandler aufweisen, der zur Umwandlung von Bewegungsenergie der Dateneinheit in elektrische Energie zur Speisung der Dateneinheit ausgebildet ist. Somit kann durch Bewegungen der Dateneinheit elektrische Energie erzeugt werden. Zu diesem Zweck kann der interne Energieumwandler beispielsweise über eine Pendelschwungmasse oder einen Rotor verfügen, so wie sie von Automatikuhren bekannt sind.

Wie bereits angedeutet, ist es besonders vorteilhaft, wenn der Sender zum Senden von Daten des Bearbeitungssystems ausgebildet ist.

Alternativ oder zusätzlich kann der Sender zum Senden von mit dem Sensor ermittelten Messdaten ausgebildet sein. Bei dem Sensor kann es sich etwa um einen Lichtsensor, einen Temperatursensor, einen Beschleunigungssensor, einen Abstandssensor, einen Spannungssensor, einen Stromsensor, einen Frequenzsensor oder einen Amplitudensensor handeln. Mit einem Spannungssensor oder einem Stromsensor können beispielsweise die an einem Ultraschallkonverter anliegende Spannung bzw. der durch ihn fliessende Strom gemessen werden, insbesondere durch eine induktive oder eine kapazitive Messung. Aus der Spannung und dem Strom kann mittels einer unten noch näher beschriebenen Recheneinheit ein elektrischer Widerstand berechnet werden.

Anhand der vom Sensor ermittelten Messdaten kann die Bearbeitung von Werkstücken detailliert analysiert werden. Auf dieser Basis können die Bearbeitungsprozesse effektiver gestaltet werden.

Ebenfalls vorteilhaft ist es, wenn der Sender als kontaktloser Sender ausgebildet ist, insbesondere als Bluetooth-Sender, als WiFi-Sender oder als NFC-Sender. Hierdurch können mechanische Abnutzungen vermieden werden.

Die Dateneinheit kann ferner einen Bewegungssensor und eine damit gekoppelte Steuerung aufweisen, welche derart ausgebildet ist, dass sie die Dateneinheit in einen Energiesparmodus versetzt, wenn der Bewegungssensor ein Ruhen der Dateneinheit für einen Zeitraum meldet, der einen vorgegebenen oder vorgebbaren Mindestzeitraum überschreitet. Im Energiesparmodus kann die Steuerung beispielsweise das Senden der Daten beenden.

Mit weiterem Vorzug weist die Dateneinheit mindestens einen Lichtsensor und eine damit gekoppelte Steuerung auf, welche derart ausgebildet ist, dass sie die Dateneinheit in einen Energiesparmodus versetzt, wenn der Lichtsensor für einen Zeitraum, der einen vorgegebenen oder vorgebbaren Mindestzeitraum überschreitet, eine Lichtintensität meldet, die ein vorgegebene oder eine vorgebbare Mindestintensität unterschreitet. Hierdurch kann der Energiesparmodus aktiviert werden, wenn z. B. das Bearbeitungssystem zusammen mit der Dateneinheit für einen gewissen Zeitraum in einem abgedunkelten Lager aufbewahrt wird.

Insbesondere wenn das Bearbeitungssystem ein Schwingungsbearbeitungssystem ist, ist es vorteilhaft, wenn die Dateneinheit im Bereich eines Schwingungsminimums der Schwingungsbearbeitungskomponente angeordnet oder anordenbar ist. Auf diese Weise wird die Übertragung von störenden Schwingungen auf die Dateneinheit verhindert.

In vielen Ausführungsformen umfasst die Bearbeitungskomponenten mindestens einen Ultraschallkonverter und/oder mindestens einen Ultraschallbooster und/oder eine Ultraschallsonotrode und/oder mindestens einen Amboss.

Vorzugsweise weist die Dateneinheit weiterhin einen Datenspeicher zum Speichern von Daten, insbesondere von Daten des Bearbeitungssystems, auf. Es kann sich dabei um ein temporäres oder ein dauerhaftes Speichern handeln.

Weiterhin ist es vorteilhaft, wenn die Dateneinheit einen Datenempfänger zum Empfangen von Daten, insbesondere von Daten des Bearbeitungssystems, aufweist. Sind ein Empfänger und ein Datenspeicher vorhanden, so können Daten des Schwingungsbearbeitungssystems mittels des Datenempfängers empfangen werden und dann im Datenspeicher gespeichert werden.

Das Bearbeitungssystem kann selbstverständlich mehrere Dateneinheiten aufweisen. Vorzugsweise enthalten diese mehreren Dateneinheiten eine jeweils eindeutige Kennung. Beispielsweise kann es sich um eine an sich bekannte MAC-Adresse handeln. Dies erlaubt die eindeutige Identifikation einer Dateneinheit.

Weitere Vorteile entstehen, wenn die Dateneinheit eine Recheneinheit zum Verarbeiten von Daten aufweist, insbesondere von Daten des Bearbeitungssystems und/oder von mit dem Sensor ermitteln Messdaten. Auf diese Weise können beispielsweise vom Sensor ermittelte Messdaten einer ersten Vorverarbeitung unterzogen werden und dann nur ein Teil der Daten oder aus den Daten generierte, vorverarbeitete Metadaten mit Hilfe des Senders übertragen werden.

Ausserdem kann es zweckmässig sein, wenn die Dateneinheit eine Verschlüsselungseinheit zum Verschlüsseln von mit dem Sender gesendete Daten aufweist, insbesondere von Daten des Bearbeitungssystems und/oder von mit dem Sensor ermittelten Messdaten. Dies verhindert das unberechtigte Auslesen von Informationen über den konkreten Bearbeitungsprozess. Die Verschlüsselung kann beispielsweise mit der Blockchain-Technologie erfolgen.

Ebenfalls mit Vorzug weist das Bearbeitungssystem eine Authentifizierungseinheit zum Authentifizieren der Dateneinheit anhand der vom Sender gesendeten Daten auf. Hierdurch kann wirkungsvoll eine Manipulation ausgeschlossen werden.

Eine oder mehrere Komponenten des Bearbeitungssystems, beispielsweise ein Ultraschallkonverter, ein Ultraschallbooster und eine Ultraschallsonotrode, können über einen Identifikator verfügen, wie es in der internationalen Patentanmeldung PCT/EP2017/080780 beschrieben ist. Diese Identifikatoren können beispielsweise in Form eines Barcodes oder eines QR-Codes vorliegen. Die von den Identifikatoren ausgelesenen Daten können und über den Datenempfänger der Dateneinheit in deren Datenspeicher gespeichert werden.

Nachfolgend werden die Erfindung und ihre Vorteile anhand mehrerer Ausführungsbeispiele näher erläutert. Dabei zeigen
- Figur 1:: ein erfindungsgemässes Bearbeitungssystem in einer schematischen Darstellung;
- Figur 2:: die Dateneinheit des Bearbeitungssystems gemäss Figur 1 in einer schematischen Darstellung.

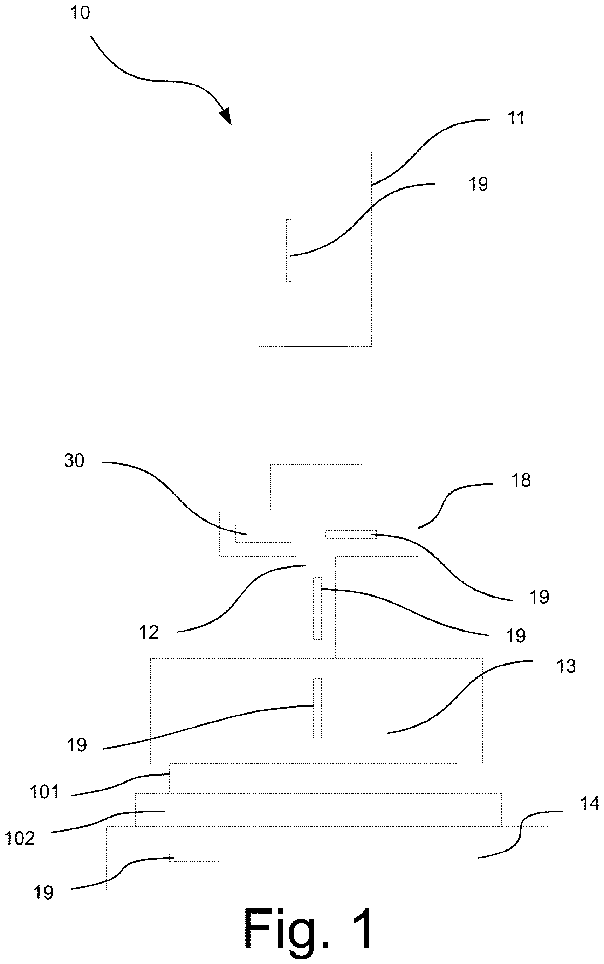

Figur 1 zeigt ein erfindungsgemässes Bearbeitungssystem in Gestalt eines Ultraschallschweisssystems 10, mit dem zwei Werkstücke 101, 102 auf an sich bekannte Weise miteinander verschweisst werden können. Das Ultraschallschweisssystems 10 enthält als Schwingungskomponenten eine Ultraschallsonotrode 11, einen Ultraschallbooster 12 und eine Ultraschallsonotrode 13. Der Ultraschallbooster 12 wird in einem Schwingungsminimum von einer Halteplatte 18 gehalten. Das Ultraschallschweisssystem 10 enthält ferner einen Amboss 14, welcher derart angeordnet ist, dass sich die beiden miteinander zu verschweissenden Werkstücke 101, 102 zwischen der Ultraschallsonotrode 13 und dem Amboss 14 befinden.

Der Konverter 11, der Ultraschallbooster 12, die Ultraschallsonotrode 13, die Halteplatte 18 und der Amboss 14 verfügen über jeweils einen Identifikator 19, der beispielsweise als Barcode oder als QR-Code ausgeführt sein kann. Diese Identifikatoren 19 enthalten Daten der jeweiligen Komponente, der sie zugeordnet sind. Beispielsweise kann der Identifikator 19 der Ultraschallsonotrode 13 Informationen über deren Resonanzfrequenz enthalten. Die Halteplatte 18 weist ausser seinem Identifikator 19 eine Dateneinheit 30 auf, die somit im Bereich eines Schwingungsminimums angeordnet ist und folglich nur wenig von den Ultraschallschwingungen beeinträchtigt wird.

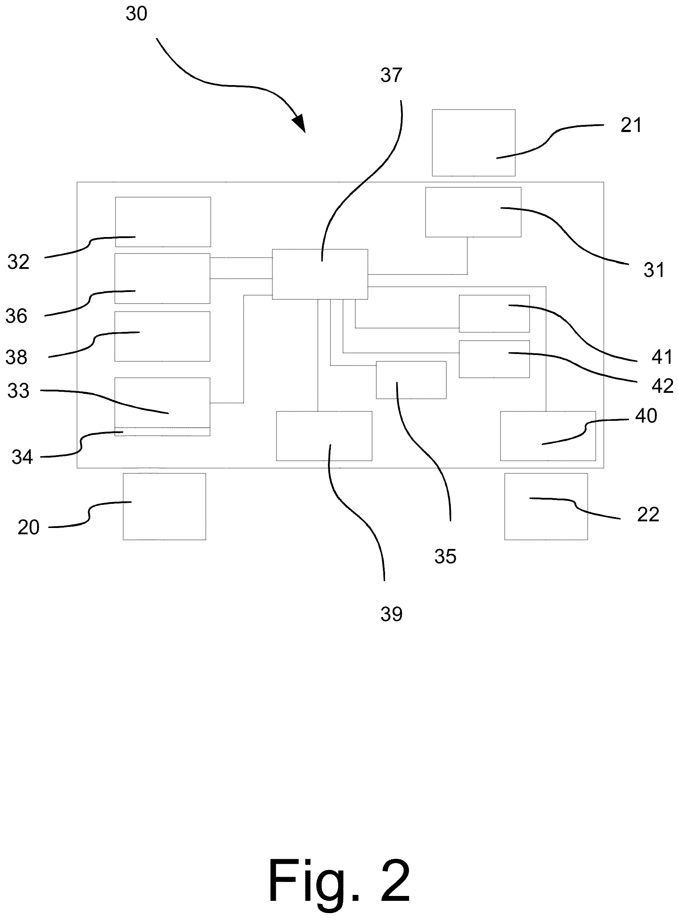

Die Dateneinheit 30 ist in Figur 2 detailliert dargestellt. Sie enthält einen als Photovoltaikzelle 33 ausgebildete Energieempfänger 33 und einen Frequenzfilter 34. Dargestellt ist weiterhin eine Leuchtdiode 20 des Ultraschallschweisssystems 10 oder einer das Ultraschallschweisssystem 10 enthaltenden Anlage. Sendet diese Leuchtdiode 20 Strahlung aus, so kann diese den Frequenzfilter 34 bei geeigneter Anpassung durchdringen und den Energieempfänger 33 und damit die Dateneinheit 30 mit Energie versorgen.

Die Dateneinheit 30 verfügt weiterhin über einen Sender 31, der bevorzugt kontaktloser Sender 31 ausgeführt ist, beispielsweise als an sich bekannter Bluetooth-Sender 31. Mit Hilfe dieses Senders 31 können Daten des Ultraschallschweisssystems 10 kontaktlos an einen Datenempfänger 21 des Ultraschallschweisssystems 10 oder einer das Ultraschallschweisssystem 10 enthaltenden Anlage senden.

Die Dateneinheit 30 weist in diesem Ausführungsbeispiel zudem drei Sensoren 32, 36, 38 auf, mit denen Messdaten bestimmt werden können. Der Sensor 32 kann beispielsweise als Temperatursensor ausgeführt sein, der Sensor 36 als Bewegungssensor und der Sensor 38 als Lichtsensor. Diese Messdaten können ebenfalls vom Sender 31 der Dateneinheit 31 an den externen Datenempfänger 21 gesendet werden. Des Weiteren verfügt die Dateneinheit 30 über einen Datenempfänger 40, mit dem Daten empfangen werden können, insbesondere Daten des Ultraschallschweisssystems 10. Diese Daten können von einem nicht zur Dateneinheit 30 gehörigen Datensender 22 empfangen werden.

In einem Datenspeicher 39 können Daten, insbesondere die von den Sensoren ermittelten Messdaten und/oder die Daten des Ultraschallschweisssystems, gespeichert werden. Insbesondere können die von den Identifikatoren 19 der Konverters 11, des Ultraschallboosters 12, der Ultraschallsonotrode 13, der Halteplatte 18 und des Amboss 14 ausgelesenen Daten über den Datenempfänger 40 in den Datenspeicher 39 gespeichert werden und anschliessend bei Bedarf wieder vom Sender 31 an einen externen Datenempfänger 21 übertragen werden.

Die Dateneinheit 30 enthält ausserdem eine Steuerung 37, die zur Ausführung der oben erläuterten Funktionen mit dem Sender 31, den Sensoren 32, der Photovoltaikzelle 33, dem Datenspeicher 39 und dem Datenempfänger 40 verbunden ist. Die Steuerung 37 kann die Dateneinheit 30 in einen Energiesparmodus versetzen, wenn der Bewegungssensor 36 ein Ruhen der Dateneinheit 30 für einen vorgegebenen Mindestzeitraum meldet. In diesen Energiesparmodus kann die Steuerung 37 beispielsweise das Senden der Daten beenden. Alternativ oder zusätzlich kann die Steuerung 37 die Dateneinheit 30 in den Energiesparmodus versetzen, wenn der Lichtsensor 38 für einen gewissen Mindestzeitraum eine Lichtintensität unterhalb einer vorgegebenen Mindestintensität meldet.

Mittels einer Recheneinheit 41 können Daten verarbeitet werden, insbesondere Daten des Ultraschallschweisssystems 10 und/oder mit dem Sensor ermittelten Messdaten. Eine Verschlüsselungseinheit 42 erlaubt das Verschlüsseln von Daten, bevor diese mit dem Sender 31 gesendet werden.

## Patentansprüche

1. Bearbeitungssystem (10) zum Bearbeiten mindestens eines Werkstücks (101; 102), insbesondere Schwingungsbearbeitungssystem (10) oder Rotationsbearbeitungssystem, insbesondere Ultraschallbearbeitungssystem (10) oder Vibrationsbearbeitungssystem, insbesondere Ultraschallschweisssystem (10) oder Vibrationsschweisssystem, wobei Bearbeitungssystem (10) mindestens eine Bearbeitungskomponente (11; 12; 13; 14), insbesondere mindestens eine Schwingungskomponente (11; 12; 13), und mindestens eine mit der Bearbeitungskomponente (11; 12; 13; 14) verbundene oder verbindbare Dateneinheit (30) enthält, wobei die Dateneinheit (30) mindestens einen Sender (31) und mindestens einen Sensor (32; 36; 38) enthält.

2. Bearbeitungssystem (10) gemäss Anspruch 1,
wobei die Dateneinheit (30) einen Energieempfänger (33) aufweist, mittels dessen die Dateneinheit (10) Energie zur Energieversorgung der Dateneinheit (30), insbesondere des Senders (31), empfangen kann.

3. Bearbeitungssystem (10) gemäss Anspruch 2,
wobei der Energieempfänger (33) als Photovoltaikzelle (33) ausgebildet ist.

4. Bearbeitungssystem (10) gemäss Anspruch 3,
wobei das Bearbeitungssystem (10) mindestens ein Leuchtelement (20), insbesondere mindestens eine Leuchtdiode (20), aufweist, welches zur Versorgung des Energieempfängers (33) mit Strahlungsenergie angeordnet und ausgebildet ist.

5. Bearbeitungssystem (10) gemäss Anspruch 4,
wobei die Dateneinheit (30) einen Frequenzfilter (34) zum Herausfiltern eines Frequenzbereichs der vom Leuchtelement (20) abgegebenen Strahlung aufweist.

6. Bearbeitungssystem (10) gemäss einem der Ansprüche 4 und 5,
wobei das Bearbeitungssystem (10) mindestens zwei Leuchtelemente (20), insbesondere mindestens zwei Leuchtdioden (20), aufweist, welche zur Versorgung des Energieempfängers (33) mit Strahlungsenergie mit zwei verschiedenen Spektren angeordnet und ausgebildet sind.

7. Bearbeitungssystem (10) gemäss einem der vorangehenden Ansprüche,
wobei die Dateneinheit (30) mindestens einen internen Energieumwandler aufweist, der zur Umwandlung von Bewegungsenergie der Dateneinheit (30) in elektrische Energie zur Speisung der Dateneinheit (30) ausgebildet ist.

8. Bearbeitungssystem (10) gemäss einem der vorangehenden Ansprüche,
wobei der Sender (31) zum Senden von Daten des Bearbeitungssystems (10) ausgebildet ist.

9. Bearbeitungssystem (10) gemäss einem der vorangehenden Ansprüche,
wobei der Sender (31) zum Senden von mit dem Sensor (32; 36; 38) ermittelten Messdaten ausgebildet ist.

10. Bearbeitungssystem (10) gemäss einem der vorangehenden Ansprüche,
wobei der Sender (31) als kontaktloser Sender (31), insbesondere als Bluetooth-Sender (31), WiFi-Sender oder NFC-Sender ausgebildet ist.

11. Bearbeitungssystem (10) gemäss einem der vorangehenden Ansprüche,
wobei die Dateneinheit (30) mindestens einen Bewegungssensor (36) und eine damit gekoppelte Steuerung (37) aufweist, welche derart ausgebildet ist, dass sie die Dateneinheit (30) in einen Energiesparmodus versetzt, insbesondere das Senden der Daten beendet, wenn der Bewegungssensor (36) ein Ruhen der Dateneinheit (30) für einen Zeitraum meldet, der einen vorgegebenen oder vorgebbaren Mindestzeitraum überschreitet.

12. Bearbeitungssystem (10) gemäss einem der vorangehenden Ansprüche,
wobei die Dateneinheit (30) mindestens einen Lichtsensor (38) und eine damit gekoppelte Steuerung (37) aufweist, welche derart ausgebildet ist, dass sie die Dateneinheit (30) in einen Energiesparmodus versetzt, insbesondere das Senden der Daten beendet, wenn der Lichtsensor (38) für einen Zeitraum, der einen vorgegebenen oder vorgebbaren Mindestzeitraum überschreitet, eine Lichtintensität meldet, die eine vorgegebene oder vorgebbare Mindestintensität unterschreitet.

13. Bearbeitungssystem (10) gemäss einem der vorangehenden Ansprüche,
wobei die Dateneinheit (30) im Bereich eines Schwingungsminimums der Schwingungskomponente (11; 12; 13) angeordnet oder anordenbar ist.

14. Bearbeitungssystem (10) gemäss einem der vorangehenden Ansprüche,
wobei die Bearbeitungskomponente (11; 12; 13; 14) mindestens einen Ultraschallkonverter (11; 12; 13; 14) und/oder mindestens einen Ultraschallbooster (12) und/oder mindestens eine Ultraschallsonotrode (13) und/oder mindestens einen Amboss (14) umfasst.
